(19) Europäisches Patentamt
European Patent Office
Office européen des brevets

(11) **EP 4 738 815 A1**

(12) **EUROPEAN PATENT APPLICATION**

(43) Date of publication:
06.05.2026 Bulletin 2026/19

(21) Application number: 24307248.5

(22) Date of filing: 20.12.2024

(51) International Patent Classification (IPC):
*H04N 19/11* (2014.01)     *H04N 19/119* (2014.01)
*H04N 19/12* (2014.01)     *H04N 19/176* (2014.01)
*H04N 19/593* (2014.01)

(52) Cooperative Patent Classification (CPC):
**H04N 19/593; H04N 19/11; H04N 19/119;
H04N 19/12; H04N 19/176**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.10.2024 EP 24306846**

(71) Applicant: **InterDigital CE Patent Holdings, SAS
75017 Paris (FR)**

(72) Inventors:
• **PURI, Saurabh
SAINT-LAZARE, J7T 0P6 (CA)**
• **BONNINEAU, Charles
MONTREAL, H2J 1G1 (CA)**
• **UTIDA BARBOSA FERREIRA, Renan
MONTREAL, H1X3H7 (CA)**
• **NASER, Karam
35250 MOUAZE (FR)**

(74) Representative: **Vossius & Partner
Patentanwälte Rechtsanwälte mbB
Siebertstraße 3
81675 München (DE)**

(54) **TRANSFORM DERIVATION USING DIMD FOR TIMD/DIMD MODE**

(57)     Systems, methods, and instrumentalities are configured for transform derivation using decoder-side intra mode derivation (DIMD) for one or more of template-based intra mode derivation (TIMD) mode or DIMD mode. In examples, a video coding device may be configured to determine that a template-based intra mode derivation (TIMD) mode is enabled for a current block. The device may apply a decoder side intra mode derivation (DIMD) like process to derive a virtual intra prediction mode (VIPM) from a neighboring reconstructed template of a current block or a prediction block associated with the current block. The device may, based on the derived VIPM, determine a transform kernel set for predicted residual coding.

FIG. 9

**Description**

**CROSS-REFERENCE TO RELATED APPLICATIONS**

This application claims the benefit of EP provisional patent application No. 24306846.7, filed October 31, 2024, the disclosure of which is incorporated herein by reference in its entirety.

**BACKGROUND**

The present application is related to video coding systems that may be used to compress digital video signals, e.g., to reduce the storage and/or transmission bandwidth needed for such signals. Video coding systems may include, for example, block-based, wavelet-based, and/or object-based systems.

**SUMMARY**

Systems, methods, and instrumentalities are configured for transform derivation using decoder-side intra mode derivation (DIMD) for one or more of template-based intra mode derivation (TIMD) mode or DIMD mode. In examples, a video coding device may be configured to determine that a template-based intra mode derivation (TIMD) mode is enabled for a current block. The device may apply a decoder side intra mode derivation (DIMD) like process to derive a virtual intra prediction mode (VIPM) from a neighboring reconstructed template of the current block or a prediction block associated with the current block. The device may, based on the derived VIPM, determine a transform kernel set for predicted residual coding.

The device may, on a condition that the processor is configured to apply the DIMD like process to the neighboring reconstructed template, apply the DIMD like process when the TIMD mode and a TIMD blending mode are enabled. The device may, on a condition that the processor is configured to apply the DIMD like process to the prediction block, apply the DIMD like process when a DIMD blending mode is enabled or the TIMD mode and a TIMD blending mode are enabled .

The device may determine that matrix-based position dependent prediction (PDP) is enabled for the current block. The transform kernel set may be one of a multi-transform selection (MTS), a low frequency non-separable transform (LFNST), or a non-separable primary transform (NSPT).

Deriving the VIPM may include deriving the VIPM when a TIMD mode or a DIMD mode is blended with a BV-based predictor.

The VIPM may be a first VIPM and the current block may be a TIMD block. The device may derive the first VIPM using a first bin of a histogram of gradients (HoGs) computed on the prediction block. The device may derive a second VIPM using a second bin of the HoGs on the prediction block. The device may, based on the first VIPM, determine a first transform kernel set. The device may, based on the second VIPM, determine a second transform kernel set. The device may test the first transform kernel set and the second transform kernel set to select one of the first transform kernel set or the second transform kernel set.

The VIPM derived to obtain the transform kernel set may be one of a multi-transform selection (MTS), a low frequency non-separable transform (LFNST), or a non-separable primary transform (NSPT).

A video coding device may be configured to apply decoder-side intra mode derivation (DIMD) to a neighboring reconstructed template associated with a current block to derive a virtual intra prediction mode (VIPM) associated with the current block. The device may, based on the derived VIPM, determine a transform kernel set for predicted residual coding.

The device may derive the VIPM on predicted samples of the current block. The transform kernel set may be associated with multi-transform selection (MTS) or at least one of a low frequency non-separable transform (LFNST) or a non-separable primary transform (NSPT). The device may determine that a TIMD blending mode is enabled. The device may determine that a TIMD mode and a TIMD blending mode is enabled. The device may determine that a TIMD is blended with a BV-based predictor. The coding device may include a video decoding device. The coding device may include a video encoding device.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.

FIG. 2 shows an example video encoder according to one or more embodiments of the present disclosure.

FIG. 3 shows an example video decoder according to one or more embodiments of the present disclosure.

FIG. 4 shows an example decoder side intra mode derivation (DIMD) template to form a histogram of gradients (HoG).

FIG. 5 illustrates an example position dependent prediction (PDP) (left) and PDP for template cost calculation in template-based intra mode derivation (TIMD) (right).

FIG. 6 shows an example of four reference lines neighboring to a prediction block.

FIG. 7 shows an example of an extended multiple reference line (MRL) candidate list.

FIG. 8 shows an example template area.

FIG. 9 illustrates an example explicit multiple transform selection (MTS) set selection (e.g., modeIdx=4 and sizeIdx=0).

FIG. 10 shows an example region of interest (ROI) for low-frequency non-separable transform (LFNST) 16.

FIG. 11 shows an example ROI for LFNST8.

FIG. 12 shows an example of block sizes for which non-separable primary transform (NSPT) may be applied where LFNST may be applied for the rest.

## DETAILED DESCRIPTION

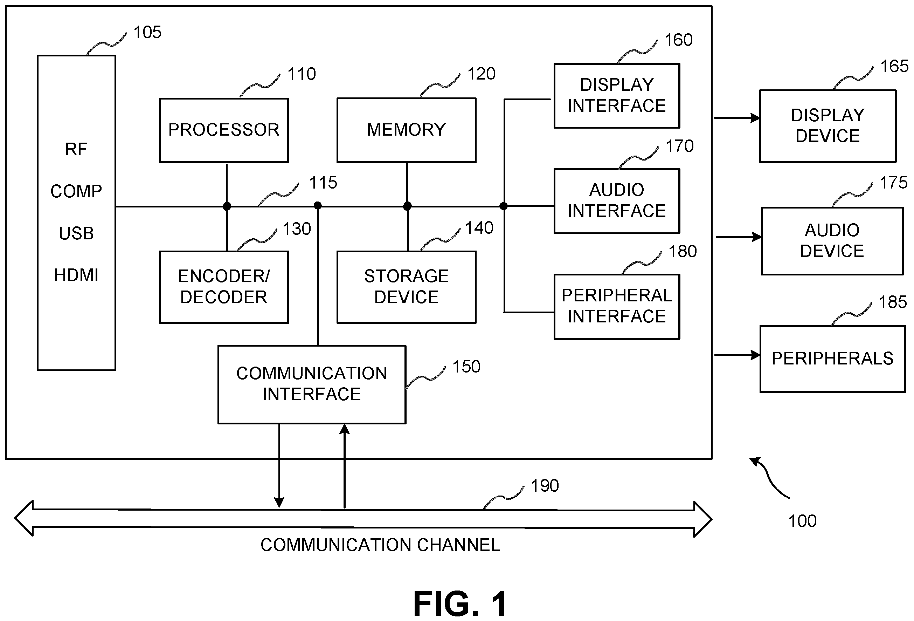

In describing the various embodiments of the present disclosure, certain terminology is used herein for convenience only and should not be considered as limiting such embodiments. In the drawings, the same reference numerals are employed for designating the same elements throughout the several figures and the present description.
Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.
One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.
The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.
The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.
The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

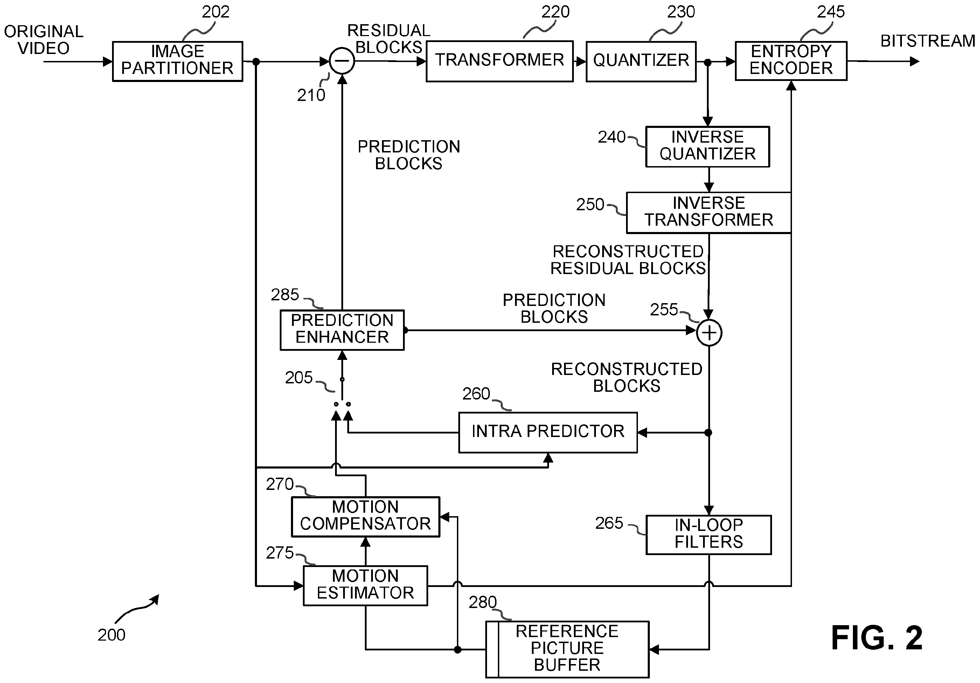

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (WC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

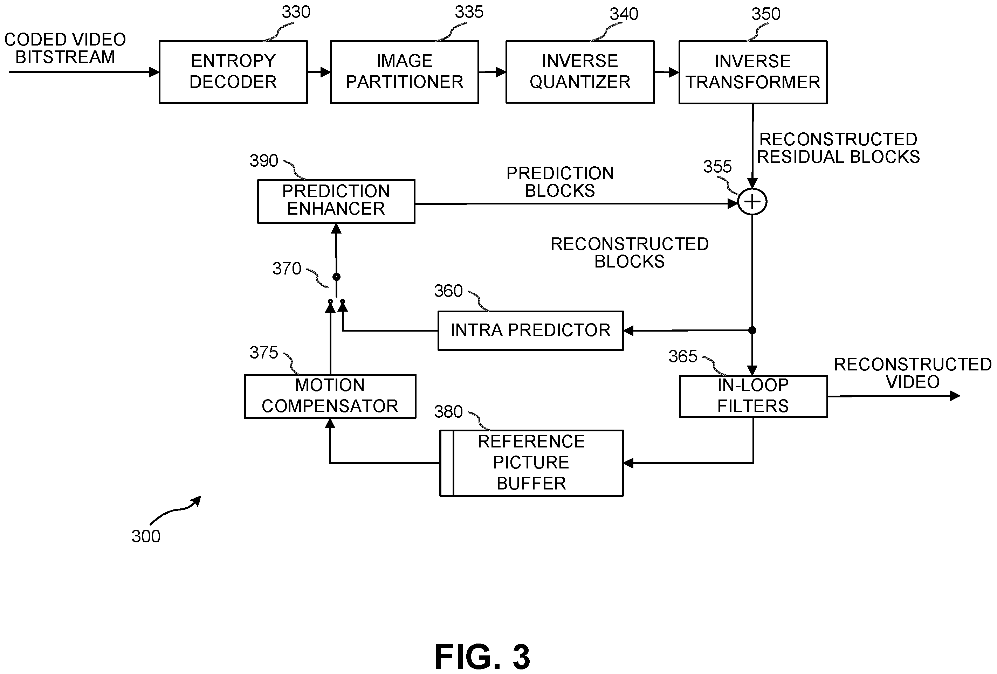

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, Cb, Cr).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Systems, methods, and instrumentalities are configured for transform derivation using decoder-side intra mode derivation (DIMD) for one or more of template-based intra mode derivation (TIMD) mode or DIMD mode. In examples, a video coding device may be configured to determine that a template-based intra mode derivation (TIMD) mode is enabled for a current block. The device may apply a decoder side intra mode derivation (DIMD) like process to derive a virtual intra prediction mode (VIPM) from a neighboring reconstructed template of the current block or a prediction block associated with the current block. The device may, based on the derived VIPM, determine a transform kernel set for predicted residual coding.

The device may, on a condition that the processor is configured to apply the DIMD like process to the neighboring reconstructed template, apply the DIMD like process when the TIMD mode and a TIMD blending mode are enabled. The device may, on a condition that the processor is configured to apply the DIMD like process to the prediction block, apply the DIMD like process when a DIMD blending mode is enabled or the TIMD mode and a TIMD blending mode are enabled .

The device may determine that matrix-based position dependent prediction (PDP) is enabled for the current block. The transform kernel set may be one of a multi-transform selection (MTS), a low frequency non-separable transform (LFNST), or a non-separable primary transform (NSPT).

Deriving the VIPM may include deriving the VIPM when a TIMD mode or a DIMD mode is blended with a BV-based predictor.

The VIPM may be a first VIPM and the current block may be a TIMD block. The device may derive the first VIPM using a first bin of a histogram of gradients (HoGs) computed on the prediction block. The device may derive a second VIPM using a second bin of the HoGs on the prediction block. The device may, based on the first VIPM, determine a first transform kernel set. The device may, based on the second VIPM, determine a second transform kernel set. The device may test the first transform kernel set and the second transform kernel set to select one of the first transform kernel set or the second transform kernel set.

The VIPM derived to obtain the transform kernel set may be one of a multi-transform selection (MTS), a low frequency non-separable transform (LFNST), or a non-separable primary transform (NSPT).

A video coding device may be configured to apply decoder-side intra mode derivation (DIMD) to a neighboring reconstructed template associated with a current block to derive a virtual intra prediction mode (VIPM) associated with the current block. The device may, based on the derived VIPM, determine a transform kernel set for predicted residual coding.

The device may derive the VIPM on predicted samples of the current block. The transform kernel set may be associated with multi-transform selection (MTS) or at least one of a low frequency non-separable transform (LFNST) or a non-separable primary transform (NSPT). The device may determine that a TIMD blending mode is enabled. The device may determine that a TIMD mode and a TIMD blending mode is enabled. The device may determine that a TIMD is blended with a BV-based predictor. The coding device may include a video decoding device. The coding device may include a video encoding device.

Examples described herein may be associated with split inference (e.g., collaborative intelligence), e.g., machine vision analytics such as classification, object detection, object tracking, etc. with split deep neural networks (DNN) that are physically apart from one another and communicate by transmitting intermediate data at the split point.

With machine learning technologies for vision applications in domains like intelligent transportation, smart cities, intelligent content management, etc., the amount of video and images consumed by machines may increase. In examples, vision tasks may use computations and perform on cloud systems and devices capturing the source content, which may transmit video content. For video transmission pipelines, the amount of source data may use compression to fit physical bandwidth and storage capacities. Examples described herein may be associated with image and video codecs associated with human consumption. Machine vision algorithms may (or may not) be sensitive to artifacts when applying lossy compression.

The coding of TIMD and/or DIMD predicted residuals may be affected by improving the selection of transform kernels (e.g., primary and secondary). In video coding, DIMD may be performed on the predicted block to derive the Virtual Intra Prediction Mode (VIPM) for certain modes such as inter modes, Matrix-based Intra prediction (MIP), Extrapolation based Intra prediction (EIP) etc. In TIMD/DIMD, the first intra mode may be used for transform kernel selection. TIMD may be used in blending mode where intra modes are blended with planar and/or block vector-based prediction. A first intra mode for transform derivation may be used. The transform selection may be affected as described herein. The DIMD may be performed on the reconstructed template to derive the transform kernel set. In examples, the DIMD may be performed on the predicted block to derive the transform kernel set.

Examples described herein may be associated with decoder side intra mode derivation (DIMD). Decoder side intra mode derivation (DIMD) may be based on the reconstructed pixels surrounding a given block predicted carrying information to infer the texture directionality in this block, e.g., the intra prediction modes that most likely generate the predictions with qualities (e.g., the highestlmost desirable qualities).

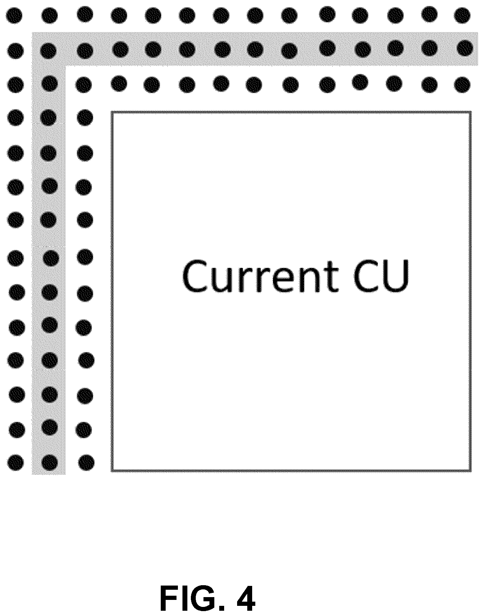

FIG. 4 shows an example decoder side intra mode derivation (DIMD) template to form a histogram of gradients (HoG).

Gradients may be extracted from a context of reconstructed pixels around the current block using a fixed template of three lines above and to the left of the current block as shown in FIG. 4. The gradients may be used to fill a histogram of gradients (HoG) computed using the sobel filter. The intra prediction modes (IPMs) that result in predictions with highest qualities may be derived from the HoG. The predictors obtained with the DIMD modes may be blended to form the final DIMD prediction. Uniform or spatial blending may be used where the DIMD predictors are combined with a Planar predictor or a Block-Vector based predictor using weights that depend on the relative magnitudes of the modes in the histogram of gradients.

DIMD may be considered as a derived intra mode. A set of modes may be included into the primary list of intra most probable modes (MPM). The DIMD process may be performed before the MPM list is constructed. The primary derived intra mode of a DIMD block may be stored with a block and may be used for MPM list construction of the neighboring blocks.

Examples described herein may include template-based intra mode derivation (TIMD). Examples described herein may include fusion for TIMD. For an intra prediction mode in MPMs (and the wide-angle modes if the above-right and/or bottom-left reference samples are available), SATD between the prediction and reconstruction samples of the template may be calculated. Two intra prediction modes with the minimum SATD and a non-angular intra prediction mode (e.g., DC or Planar) with the lowest SATD cost may be selected as the TIMD modes. The three TIMD modes may be fused with the weights after applying PDPC process, and such weighted intra prediction may be used to code the current CU. Position dependent intra prediction combination (PDPC) may be included in the derivation of the TIMD modes.

The following conditions may be checked to determine whether the non-angular intra prediction mode is used in fusion: the non-angular intra prediction mode is different from the two selected intra prediction modes; costMode3 < 1.5*costMode1, where the costMode3 is the SATD cost of the non-angular intra prediction mode and costMode1 is the SATD cost of the first intra prediction mode. If one or more (e.g., both) of the conditions are true, intra prediction modes (e.g., three intra prediction modes) may be used to generate the prediction. The weights of an intra prediction mode may be computed from SATD cost, as follows:

$$weight_i = \frac{sumSATD - costMode_i}{2 \times sumSATD}, \; sumSATD = \sum_{j=1}^{3} costMode_i.$$

The non-angular intra prediction mode may (or may not) be used in prediction. The costs of the two selected modes may be compared with a threshold. In an example, the cost factor of 2 may be applied as follows:

$$costMode2 < 2*costMode1.$$

If the condition is true, the fusion may be applied, and for example (e.g., otherwise), mode1 may be used.

Weights of the modes may be computed from their SATD costs as follows:

$$weight1 = costMode2 / (costMode1 + costMode2)$$

$$weight2 = 1 - weight1$$

The division operations may be conducted using the same lookup table (LUT) based integerization scheme used by the CCLM.

Location-dependent sample-based fusion used in DIMD fusion may be used for the TIMD fusion, and the location-dependent criterion applying to amplitudes of the selected predictors may be replaced by a SATD cost-based criteria. The location-dependent criterion may be determined from a ratio of the normalized SATD of the selected TIMD predictors computed in above and left template area.

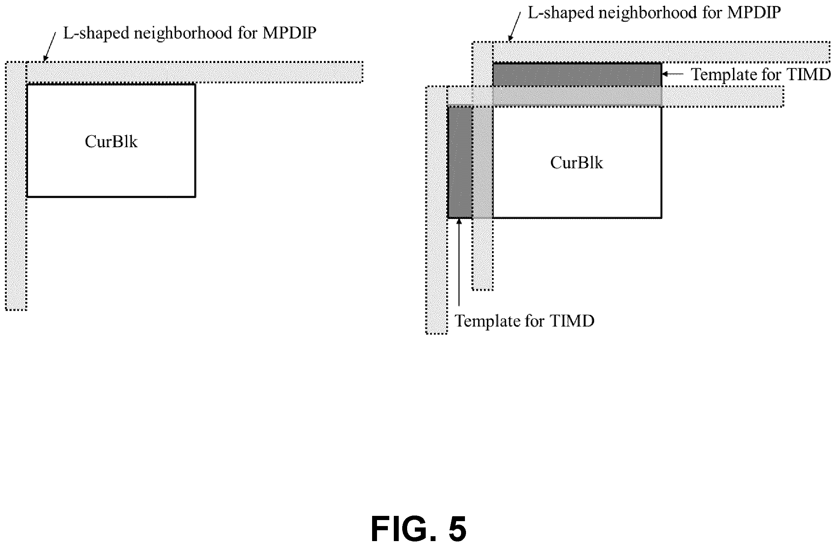

FIG. 5 illustrates an example position dependent prediction (PDP) (left) and PDP for template cost calculation in template-based intra mode derivation (TIMD) (right). Examples may include matrix-based position dependent intra prediction for TIMD. In examples, PDP for TIMD may be used, e.g., partially replacing IPMs with PDP in TIMD and employing PDP in a template cost calculation for TIMD. Matrix-based position dependent intra prediction for TIMD may be utilized by inter prediction tools using TIMD, such as CIIP and GPM intra. Matrix-based position dependent intra prediction for TIMD method may have one or more of the following characteristics. Signaling utilized may be similar to that used in TIMD. Angular modes replaced by PDP in TIMD may differ from those in intra prediction, for example, since the number of IPMs in TIMD is double of regular intra prediction. In examples, PDP may be used for mode 0, 1, and (2+4*k) for coding blocks with width and height up to 16 samples. In examples, PDP may be used for mode 0, 1, and (2+8*k). The template cost for TIMD may be calculated by applying PDP to reference samples of the template, as shown in FIG. 5. In examples, PDPC may not be applied to the PDP samples in TIMD, for example, similar to its non-application to the PDP samples in intra prediction.

Examples described herein may be associated with intra prediction fusion. Intra prediction fusion may derive predicted samples as a weighted combination of multiple predictors generated from different reference lines. Intra predictors may be generated and fused by weighted averaging. Deriving the predictors to be used in fusion may include one or more of the following features. For angular intra prediction modes including the single mode case of TIMD and DIMD, intra prediction may be derived by weighting intra predictions obtained from reference lines represented as $p_{fusion} = w_0 p_{line} + w_1 p_{line+1}$, where $p_{line}$ is the intra prediction from the default reference line and $p_{line+1}$ is the prediction from the line above the default reference line. The weights may be set as $w_0 = 3/4$ and $w_1 = 1/4$. For TIMD mode with blending (e.g., MRL-TIMD), $p_{line}$ may be used for the first mode ($w_0 = 1$, $w_1 = 0$) and $p_{line+1}$ may be used for the second mode ($w_0 = 0$, $w_1 = 1$). For DIMD mode with blending (e.g., MRL-DIMD), the number of predictors selected for a weighted average may be increased from 5 to 6.

Angular intra prediction fusion may be applied to luma blocks when angular intra mode has non-integer slope (e.g., reference samples interpolation) and the block size is greater than 16. In examples, the angular intra prediction fusion may be used with MRL, and, for example, not applied for ISP coded blocks. In examples, PDPC may be applied for the intra prediction mode using the closest to the current block reference line.

TIMD mode with blending (MRL-TIMD) may be applied when the following conditions are satisfied: the first and second modes are angular prediction mode; the current block is not an ISP coded block, the following conditions are false: abs(predModeIntra1 - predModeIntra2) is greater than Threshold, and the value of Threshold is set to 8 or 4 depending on block size; (predModeIntra1 - EXT_HOR_IDX) * (predModeIntra2 - EXT_HOR_IDX) is less than 0; or (predModeIntra1 - EXT VER_IDX) * (predModeIntra2 - EXT VER_IDX) is less than 0.

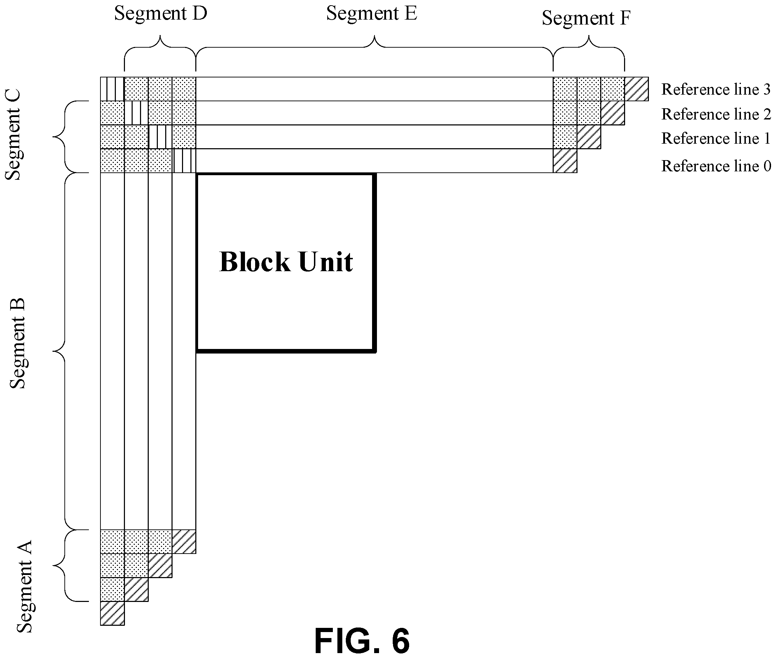

FIG. 6 shows an example of four reference lines neighboring to a prediction block. Features described herein may be associated with multiple reference line (MRL) intra prediction. Multiple reference line (MRL) intra prediction may use reference lines for intra prediction. In an example, as illustrated in FIG.6, four reference lines are used, where the samples of segments A and F are not fetched from reconstructed neighboring samples but padded with the closest samples from Segment B and E, respectively. In examples, HEVC intra-picture prediction may use the nearest reference line (e.g., reference line 0). In MRL, two additional lines (e.g., reference line 1 and reference line 3) may be used.

The index of selected reference line (mrl_idx) may be signaled and used to generate intra predictor. For reference line idx, which is greater than 0, reference line modes (e.g., additional reference line modes) may be used in MPM list, and an mpm index may be signaled (e.g., without a remaining mode). In examples, the reference line index may be signaled before intra prediction modes, and the Planar mode may be excluded from intra prediction modes based on a nonzero reference line index being signaled.

MRL may be disabled for the first line of blocks inside a CTU to prevent using extended reference samples outside the current CTU line. PDPC may be disabled when an additional line is used. For MRL mode, the derivation of a DC value in DC intra prediction mode for non-zero reference line indices may be aligned with that of reference line index 0. MRL may be associated with storage of 3 neighboring luma reference lines with a CTU to generate predictions. The Cross-Component Linear Model (CCLM) tool may be associated with (e.g., three) neighboring luma reference lines for its down sampling filters. MRL may be aligned with CCLM to use the same 3 lines, reducing storage requirements for decoders.

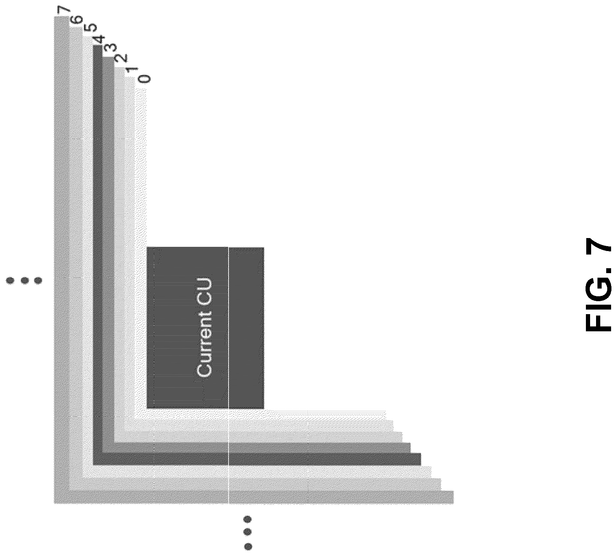

FIG. 7 shows an example of an extended MRL candidate list. An MRL list may include extended reference lines for intra prediction. The reference line list may include line indices {1, 3, 5, 7, 12} as shown in FIG. 7. For template-based intra mode derivation (TIMD), the first two reference line candidates, e.g., {1, 3}, may be used.

A template-based multiple reference line intra prediction (TMRL) mode may combine reference lines and prediction modes and use a template matching method to construct a list of candidate combinations. An index to the candidate combination list may be coded to indicate which reference line and/or prediction mode may be used to code a current block. An MRL for a non-TIMD part may be replaced by the TMRL mode.

The TMRL mode may extend a reference line candidate list and/or an intra-prediction mode candidate list. For example, the extended reference line candidate list may include lines {1, 3, 5, 7, 12} FIG. 7. The size of the intra-prediction mode candidate list may be set to 10. The construction of the intra-prediction-mode candidate list may be similar to that of MPM. A PLANAR mode may be excluded from the intra-prediction-mode candidate list. A DC mode may be added after the modes of one or more (e.g., 5) neighboring PUs and/or one or more DIMD modes (e.g., if they are not included). One or more angular modes with delta angles from ±1 to ±4 may be added. The precision of an angular prediction may be extended from 65 to 129. Non-adjacent positions may be added as candidates to construct the intra prediction candidate list. If neighboring or non-adjacent blocks are coded with an SGPM or a GPM mode, the intra modes of those blocks may be replaced by partitioning angles.

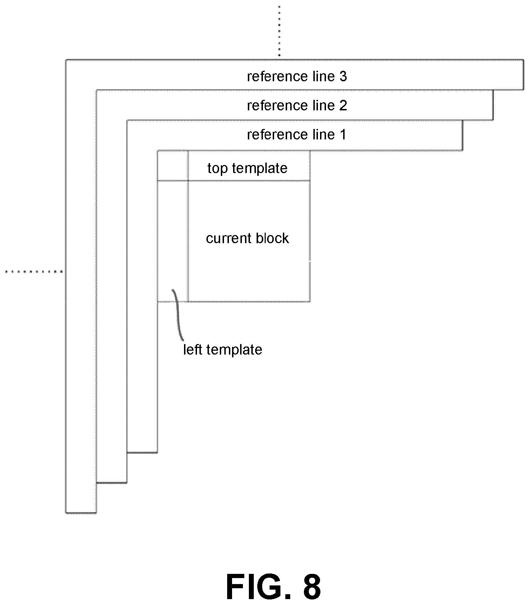

FIG. 8 shows an example template area. A TMRL candidates list may be constructed as follows. There may be multiple (e.g., 5x10=50) combinations of extended reference lines and allowed intra-prediction modes for a block. Since the extended reference line may start from reference line 1, the area covered by reference line 0 may be used for template matching. The SAD costs over a template area (e.g., as shown in FIG. 8) may be calculated between prediction samples (e.g., generated by 50 combinations) and reconstruction samples. A number of (e.g., 20) combinations with the least SAD cost may be selected in an ascending order to form the TMRL candidates list.

An index to the TMRL candidates list may be coded (e.g., instead of coding the reference lines and the intra mode directly) to indicate which combination of reference lines and prediction mode may be used to code the current block.

Feature(s) associated with intra MTS are provided herein. In a coding tool, DST7 and DCT8 transform kernels may be used, e.g., in addition to DCT2. The kernels may be used for intra coding and/or inter coding. Transform skip may be used.

In a coding tool, one or more additional primary transforms, e.g., DCT5, DST4, DST1, and/or identity transform (IDT), may be employed. One or more MTS sets may be made dependent on a transform unit (TU) size and/or intra mode information. For blocks predicted using intra template matching prediction (IntraTMP), a decoder-side intra mode derivation (DIMD) procedure may be used on a prediction block, e.g., to derive an intra mode that is used for a transform selection. For example, a horizontal gradient and/or a vertical gradient may be calculated for a predicted sample, e.g., to build a Histogram of Gradients (HoG). The intra prediction mode with one or more histogram amplitude values (e.g., the largest histogram amplitude values) may be used to determine the MTS transform set.

One or more (e.g., 16) different TU sizes may be considered. For a TU size, five different classes may be considered, e.g., depending on intra mode information. For a class, one, four, and/or six different transform pairs may be considered. The number of intra MTS candidates may be adaptively selected (e.g., between the one, four, and/or six MTS candidates). For example, the number of intra MTS candidates may be adaptively selected between the one, four, and/or six MTS candidates depending on the sum of the absolute value of transform coefficients. The sum may be compared against thresholds (e.g., two fixed thresholds) to determine the total number of allowed MTS candidates as described herein:

    1 candidate: sum <= th0
    4 candidates: th0 < sum <= th1
    6 candidates: sum > th1

A total of 80 (e.g., 16 transform sizes times 5 classes) different classes may be considered. One or more of the different classes may share the same transform set. For example, in a video coding device, 58 (e.g., less than 80) unique entries may exist in the resultant look-up table (LUT).

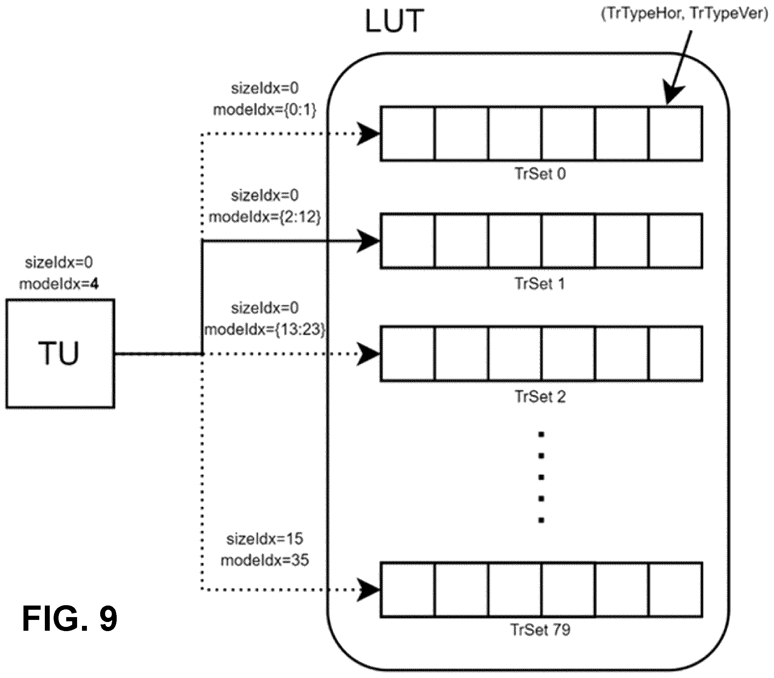

FIG. 9 illustrates an example explicit MTS set selection (e.g., modeldx=4 and sizeldx=0). For angular modes, a joint symmetry over a TU shape and intra prediction may be considered. A mode i (e.g., i > 34) with a TU shape A×B may be mapped. For example, a mode i (e.g., i > 34) with a TU shape A×B may be mapped to the same class corresponding to the mode j = (68 - i) with a TU shape B×A. For a transform pair, the order of the horizontal transform kernel and the vertical transform kernel may be swapped. For example, a 16x4 block with mode 18 (e.g., horizontal prediction) and a 4x16 block with mode 50 (e.g., vertical prediction) may be mapped to the same class. The vertical and horizontal transform kernels may be swapped. For the wide-angle modes, an angular mode (e.g., the nearest angular mode) may be used for the transform set determination. For example, mode 2 may be used for one or more (e.g., all) of the modes between -2 and -14. Mode 66 may be used for mode 67 to mode 80. A dedicated mode index may be assigned to a matrix-based intra prediction (MIP), e.g., resulting in a total of 36 possible modes entries in the LUT. An example of transform set selection in the LUT for a given TU size and intra mode may be illustrated in FIG. 9.

IDT may be applied for one or more blocks that are 16x16 or smaller and/or may have intra modes within a range around horizontal and/or vertical intra directions (e.g., the proximity of horizontal and/or vertical intra directions). The proximity may be defined by a threshold that depends on the block size. For example, if the transform index is equal to 3 and a block is 16x16 or smaller and has intra modes within the proximity of horizontal and/or vertical intra directions, the horizontal and/or vertical identity transform may be applied.

Technique(s) described herein may be used for LFNST. The LFNST design may be extended as follows. The number of LFNST sets (S) and candidates (C) in a set may be extended to S=35 and C=3, and the LFNST set (IfnstTrSetldx) for a given intra mode (predModeIntra) may be derived according to the following formula:

    For predModeIntra < 2, IfnstTrSetldx may be equal to 2
    IfnstTrSetldx = predModeIntra, for predModeIntra in [2,34]
    IfnstTrSetldx = 68 - predModeIntra, for predModeIntra in [35,66]

Three different kernels, LFNST4, LFNST8, and LFNST16, may be defined to indicate LFNST kernel sets and may be applied to 4xN/Nx4 (N≥4), 8xN/Nx8 (N≥8), and MxN (M, N≥16), respectively.

The kernel dimensions may be specified by:

$$(LFSNT4, LFNST8^*, LFNST16^*) = (16x16, 32x64, 32x96)$$

The forward LFNST may be applied to the top-left low frequency region, which may be called region-of-interest (ROI). When LFNST is applied, primary-transformed coefficients that exist in the region other than ROI may be zeroed out.

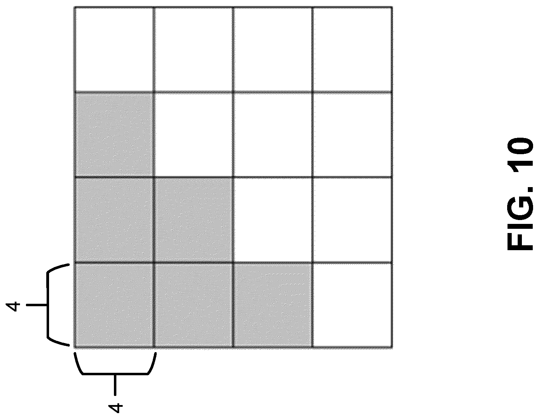

FIG. 10 shows an example ROI for LFNST16. As shown in FIG. 10, the ROI may comprise six 4x4 sub-blocks, which may be consecutive in scan order. Since the number of input samples may be 96, a transform matrix for forward LFNST 16 may be Rx96. For example, R may be chosen to be 32 and 32 coefficients (e.g., two 4x4 sub-blocks) may be generated from forward LFNST16. The 32 coefficients may be placed following coefficient scan order.

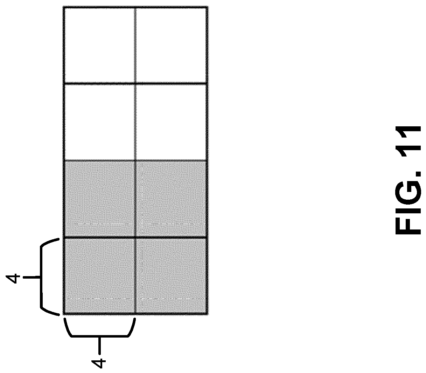

FIG. 11 shows an example ROI for LFNST8. The forward LFNST8 matrix may be Rx64 and R may be chosen to be 32. The generated coefficients may be located in the same manner as with LFNST16.
The mapping from intra prediction modes to these sets may be shown in Table 1.

Table 1. Example mapping of intra prediction modes to LFNST set index

| Intra pred. mode | -14 | -13 | -12 | -11 | -10 | -9 | -8 | -7 | -6 | -5 | -4 | -3 | -2 | -1 | 0 | 1 |
|---|---|---|---|---|---|---|---|---|---|---|---|---|---|---|---|---|
| LFNST set index | 2 | 2 | 2 | 2 | 2 | 2 | 2 | 2 | 2 | 2 | 2 | 2 | 2 | 2 | 0 | 1 |
| Intra pred. mode | 2 | 3 | 4 | 5 | 6 | 7 | 8 | 9 | 10 | 11 | 12 | 13 | 14 | 15 | 16 | 17 |
| LFNST set index | 2 | 3 | 4 | 5 | 6 | 7 | 8 | 9 | 10 | 11 | 12 | 13 | 14 | 15 | 16 | 17 |
| Intra pred. mode | 18 | 19 | 20 | 21 | 22 | 23 | 24 | 25 | 26 | 27 | 28 | 29 | 30 | 31 | 32 | 33 |
| LFNST set index | 18 | 19 | 20 | 21 | 22 | 23 | 24 | 25 | 26 | 27 | 28 | 29 | 30 | 31 | 32 | 33 |
| Intra pred. mode | 34 | 35 | 36 | 37 | 38 | 39 | 40 | 41 | 42 | 43 | 44 | 45 | 46 | 47 | 48 | 49 |
| LFNST set index | 34 | 35 | 36 | 37 | 38 | 39 | 40 | 41 | 42 | 43 | 44 | 45 | 46 | 47 | 48 | 49 |
| Intra pred. mode | 50 | 51 | 52 | 53 | 54 | 55 | 56 | 57 | 58 | 59 | 60 | 61 | 62 | 63 | 64 | 65 |
| LFNST set index | 18 | 17 | 16 | 15 | 14 | 13 | 12 | 11 | 10 | 9 | 8 | 7 | 6 | 5 | 4 | 3 |
| Intra pred. mode | 66 | 67 | 68 | 69 | 70 | 71 | 72 | 73 | 74 | 75 | 76 | 77 | 78 | 79 | 80 | |
| LFNST set index | 2 | 2 | 2 | 2 | 2 | 2 | 2 | 2 | 2 | 2 | 2 | 2 | 2 | 2 | 2 | |

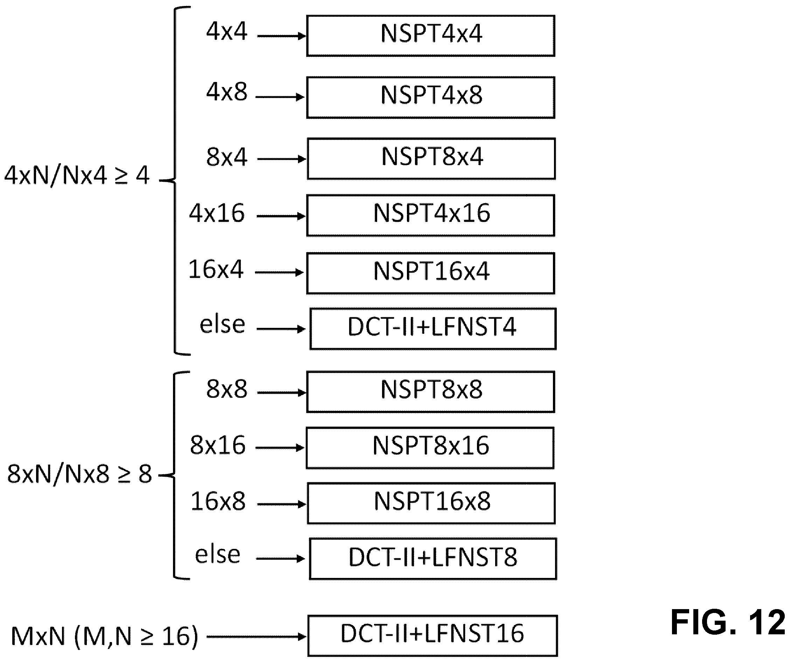

NSPT (Non-Separable Primary Transform) may be designed to replace the two stages of transform (e.g., DCT2-LFNST) with a single non-separable transform. FIG. 12 shows an example of block sizes for which non-separable primary transform (NSPT) may be applied where LFNST may be applied for the rest. As shown in FIG. 12, NSPT may be allowed (e.g., only allowed) for small blocks.
NSPTs may comprise 35 sets with 3 candidates in a (e.g., each) set. For example, the kernels of NSPT may have the following shapes: (NSPT4x4: 16x16); (NSPT4x8/NSPT8x4: 32x20); (NSPT8x8: 64x32); (NSPT4x16/NSPT16x4: 64x24); or (NSPT8x16/NSPT16x8: 128x40). The 12, 32, 40 and 88 coefficients may be zeroed-out, for example using (NSPT4x8/NSPT8x4), (NSPT8x8), (NSPT4x16/NSPT16x4) and (NSPT8x16/NSPT16x8) respectively.
Multiple transform set selection (MTSS) may be performed for LFNST/NSPT. The LFNST/NSPT transform set may be decided (e.g., implicitly decided) by an intra prediction mode (IPM). For a block coded with PLANAR, DC or directional modes, the IPM may, for example, be set as the intra prediction mode itself. For a DIMD coded block, the IPM may, for example, be set as the best mode derived by the DIMD process with neighboring reconstructed pixels. For a TIMD coded block, the IPM may, for example, be set as the best mode derived by the TIMD process. For a MIP or ITMP coded block, the IPM may, for example, be set as the best mode derived by the DIMD process with the prediction. For an SGPM coded block, the IPM may, for example, be set as the mode corresponding to the split mode of SGPM.
The prediction strategies of DIMD, TIMD, SGPM, MIP, EIP and/or ITMP may be different from normal intra prediction modes like PLANAR, DC, and directional modes. DIMD, TIMD, SGPM and ITMP may allow combination of multiple predictions. MIP may make a prediction using matrix calculation. ITMP may reference the reconstructed region in the current picture. The prediction residual may illustrate different feature(s) from the derived IPM.
MTSS may allow CUs coded with DIMD, TIMD, MIP, EIP, SGPM and/or ITMP to select one LFNST/NSPT transform set out of two candidate sets. If the current block is coded with DIMD, TIMD, MIP, EIP, SGPM, or ITMP and LFNST/NSPT is used, a (e.g., one more) bin may be employed to indicate whether the first candidate transform set or the second candidate transform set is selected. The first candidate transform set may remain (e.g., the same as in a current version of ECM). The second candidate transform set may be derived by the DIMD process with neighboring reconstructed pixels. If a TIMD coded block applies fusion, the second TIMD IPM may be considered first to derive the second candidate set. For a SGPM coded block, the two IPM that SGPM uses may be considered first to derive the second candidate set. The difference between the first and second IPM may be larger than 4 (e.g., to maintain the diversity).

Modes like inter prediction, MIP, EIP mode etc. may perform a DIMD like process on the prediction block to derive a VIPM. The derived VIPM may be used to derive the transform kernel set for the transform coding of the predicted residual. The prediction signal for such special modes may provide a better depiction of the residual direction compared to the neighboring reconstructed samples.

TIMD may be associated with blending two angular intra prediction modes with a (e.g., one) non-angular prediction mode (e.g., DC/Planar/ or BV-based predictor). TIMD-MRL mode may be used where multiple reference lines are used to construct the final prediction sample. In examples, the transform kernel set derivation part may be associated with TIMD mode, where the first intra directional mode with lowest SATD is used to derive the transform kernel set. In examples, the transform kernel set derivation part may be associated with performing DIMD (or a DIMD like process) on the predicted samples to derive the transform kernel set. The transform kernel set derivation (e.g., derivation part) may be improved by performing DIMD on the reconstructed template.

In DIMD mode, intra modes may be blended with DC/planar or BV-based predictors. The transform kernel set derivation may be improved by performing DIMD (or a DIMD like process) on predicted samples.

For TIMD mode, a DIMD (or a DIMD like process) may be applied on the reconstructed template for transform derivation. Various mechanisms, under varying conditions, for deriving the transform kernel set may be provided.

In examples, DIMD may be applied on the reconstructed template of TIMD coded block to derive the VIPM, and the derived VIPM may be used for transform derivation. In examples, DIMD may be applied on the predicted sample of TIMD to derive the VIPM, and the derived VIPM may be used for transform derivation.

In examples, in addition to TIMD coded blocks, DIMD may be applied to DIMD coded blocks to derive the VIPM. In examples, DIMD may be applied to predicted samples of the DIMD coded blocks to derive the VIPM. In examples, DIMD may be applied to predicted samples of the DIMD when DIMD is enabled for a block. In examples, DIMD may be applied on predicted samples when TIMD blending is enabled. For TIMD mode, the reconstructed template of a coded block may be used to derive the transform derivation.

In examples, a predicted block of the DIMD coded block or TIMD coded block may be used to derive the transform kernel set when blending is performed using a block-vector based predictor. When Matrix-based PDP for TIMD is applied, DIMD may be performed on predicted samples of a TIMD block after matrix-based PDP to derive the transform kernel set.

In examples, DIMD-based VIPM may be used for TIMD in MTSS, applying DIMD-based VIPMs in examples associated with blended TIMD. DIMD may be performed on a reconstructed template for TIMD mode. In examples, DIMD or a DIMD-like process may be performed on the neighboring reconstructed template of the current block to derive a VIPM. This VIPM may be used to determine the transform kernel sets for the predicted residual coding.

In examples, the process of using DIMD or a DIMD like process on a reconstructed template for TIMD mode may be applied to MTS, LFNST/NSPT, or both. In examples, the process may be applied if/when (e.g., only if/when) TIMD blending mode is enabled. In examples, the process may be applied if/when (e.g., only if/when) TIMD and TIMD blending mode being enabled. In examples, the process may be applied if/when (e.g., only if/when) TIMD mode being blended with a BV-based predictor. The DIMD may be performed on the reconstructed block pointed by the block vector to derive the VIPM.

In examples, DIMD may be performed on a prediction block for TIMD/DIMD mode. In examples, a DIMD like process may be performed on the prediction block to derive a VIPM. The VIPM may be used to determine the transform kernel set for the predicted residual coding. Currently in ECM, similar process is used for inter, MIP, EIP modes to determine the VIPM.

This embodiment of performing DIMD on prediction block for TIMD/DIMD mode may be applied to MTS, LFNST/NSPT, or both. The process may be applied to TIMD mode if/when (e.g., only if/when) TIMD blending mode being enabled. The process may be applied to DIMD mode if/when (e.g., only if/when) DIMD blending mode is enabled. The process may be applied to TIMD mode if/when (e.g., only if/when) both TIMD and TIMD blending mode are enabled.

The process of performing DIMD on prediction block for TIMD/DIMD mode may be applied if/when (e.g., only if/when) the TIMD mode is blended with a BV-based predictor. In DIMD mode, the process may be applied if/when (e.g., only if/when) DIMD mode is blended with a BV-based predictor. The DIMD may be performed on the reconstructed block pointed by the block vector to derive the VIPM.

In examples, a matrix-based PDP may be utilized with the TIMD mode. In example, the application of DIMD or a DIMD-like process (e.g., on the prediction block) to derive the transform kernel set may be used if/when (e.g., only if/when) a matrix-based PDP method is enabled for the current block. Such a mode may provide computation of a prediction signal, which may be leveraged to derive the transform kernel set.

In examples, the DIMD process may be applied on the reconstructed template for block sizes larger than a pre-determined threshold, and a DIMD process may be applied on the predicted samples for block sizes smaller than a pre-determined threshold.

Examples described herein may be associated with MTSS. For modes such as TIMD, DIMD, SGPM, IntraTMP, MIP, and EIP, a VIPM may be computed to obtain a transform set in LFNST/NSPT and MTS. Multiple transform set selection (MTSS) may allow an (e.g., additional) transform set to be tested in addition to the initial one. The best (e.g., most desirable) transform set may be signaled to the decoder using an indication (e.g., a flag).

The computation of the first and second VIPM in MTSS may be aligned with the VIPM computation proposed in examples described herein (e.g., associated with DIMD and TIMD). The first VIPM and the second VIPM may be computed as follows for TIMD and DIMD: the first VIPM (e.g., VIPM 1), the highest bin in the HoG may be computed on the prediction signal; and/or the second VIPM (e.g., VIPM 2), the second highest bin in the HoG may be computed on the prediction signal. In examples, The VIPMs (e.g., the first VIPM and the second VIPM) may be computed on the template of reconstructed neighboring pixels. In examples, VIPMs may be computed using examples described herein (e.g., associated with TIMD and DIMD modes).

In examples, the first VIPM may be computed using, for example, MTSS, and the second VIPM may be computed using examples described herein. In examples, the first VIPM may be computed using examples described herein and the second VIPM may follow, for example, MTSS.

In examples, the first VIPM may correspond to the first VIPM computed using MTSS, and the second VIPM may correspond to the second VIPM computed using examples described herein.

In examples, a VIPM computation may be a third VIPM in MTSS for TIMD and DIMD mode. In such a case, the MTSS flag may be coded using 2 bits for DIMD and TIMD where, 0 (00) may indicate that the initial VIPM is used, 1 (01) may indicate that the second VIPM from default MTSS is used, and 2 (10) may indicate that the VIPM computation used in examples described herein.

In examples, a fusion of a transform set may be performed to keep the same number of transform candidates in the set. For example, if the mode is TIMD, a first kernel or one LFNST/NSPT kernel may be selected from the first VIPM, a second kernel may be selected from a second VIPM, and a third kernel is computed from a third VIPM. The index of the kernel selected from a transform set may be fixed (e.g., the first kernel of each transform set) or computed based on the value of the VIPM (e.g., kernel index = VIPM % N, with N a fixed integer value).

Examples described herein may be applied to DIMD or TIMD, or both. Examples described herein may be applied to MTS or LFNST/NSPT or both together.

Systems, methods, and instrumentalities are configured for transform derivation using decoder-side intra mode derivation (DIMD) for one or more of template-based intra mode derivation (TIMD) mode or DIMD mode. A video coding device may be configured to apply decoder-side intra mode derivation (DIMD) to a neighboring reconstructed template associated with a current block to derive a virtual intra prediction mode (VIPM) associated with the current block. The device may, based on the derived VIPM, determine a transform kernel set for predicted residual coding.

The device may derive the VIPM on predicted samples of the current block. The transform kernel set may be associated with multi-transform selection (MTS) or at least one of a low frequency non-separable transform (LFNST) or a non-separable primary transform (NSPT). The device may determine that a TIMD blending mode is enabled. The device may determine that a TIMD mode and a TIMD blending mode is enabled. The device may determine that a TIMD is blended with a BV-based predictor. The coding device may include a video decoding device. The coding device may include a video encoding device.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

    i. Encoding, into coded video data, syntax elements that can enable the decoder to decode the coded video data, according to any of the embodiments described herein.

ii. Video data (e.g., a bitstream) that may include one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data in order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, which can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings are thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A video coding device comprising:
   a processor configured to:

   determine that a template-based intra mode derivation (TIMD) mode is enabled for a current block;
   apply a decoder side intra mode derivation (DIMD) like process to derive a virtual intra prediction mode (VIPM) from a neighboring reconstructed template of the current block or a prediction block associated with the current block; and
   based on the derived VIPM, determine a transform kernel set for predicted residual coding.

2. The video coding device of claim 1, wherein:

   on a condition that the processor is configured to apply the DIMD like process to the neighboring reconstructed template, the processor is further configured to apply the DIMD like process when the TIMD mode and a TIMD blending mode are enabled; and
   on a condition that the processor is configured to apply the DIMD like process to the prediction block, the processor is further configured to apply the DIMD like process when a DIMD blending mode is enabled or the TIMD mode and a TIMD blending mode are enabled .

3. The video coding device of claim 1 or claim 2, wherein the processor is further configured to determine that matrix-based position dependent prediction (PDP) is enabled for the current block.

4. The video coding device of any of claims 1-3, wherein the transform kernel set is one of a multi-transform selection (MTS), a low frequency non-separable transform (LFNST), or a non-separable primary transform (NSPT).

5. The video coding device of any of claim 1, claim 3, or claim 4, wherein the processor being configured to derive the VIPM comprises the processor being configured to derive the VIPM when a TIMD mode or a DIMD mode is blended with a BV-based predictor.

6. The video coding device of claim 1, wherein the VIPM is a first VIPM and the current block is a TIMD block, and wherein the processor is configured to:

   derive the first VIPM using a first bin of a histogram of gradients (HoGs) computed on the prediction block;
   derive a second VIPM using a second bin of the HoGs on the prediction block;
   based on the first VIPM, determine a first transform kernel set;
   based on the second VIPM, determine a second transform kernel set; and
   test the first transform kernel set and the second transform kernel set to select one of the first transform kernel set or the second transform kernel set.

7. The video coding device of claim 6, wherein the VIPM derived to obtain the transform kernel set is one of a multi-transform selection (MTS), a low frequency non-separable transform (LFNST), or a non-separable primary transform (NSPT).

8. A method for video coding, wherein the method comprises:

   determining that a template-based intra mode derivation (TIMD) mode is enabled for a current block;
   applying a decoder side intra mode derivation (DIMD) like process to derive a virtual intra prediction mode (VIPM) from a neighboring reconstructed template of a current block or a prediction block associated with the current block; and
   based on the derived VIPM, determining a transform kernel set for predicted residual coding.

9. The method of claim 8, wherein the method further comprises:

   on a condition that the DIMD like process is applied to the neighboring reconstructed template, the method further comprises applying the DIMD like process when the TIMD mode and a TIMD blending mode are enabled; and
   on a condition that the DIMD like process is applied to the prediction block, the method further comprises applying the DIMD like process when a DIMD blending mode is enabled or the TIMD mode and a TIMD blending mode are enabled.

10. The method of any of claims 8 or 9, wherein the method further comprises determining that matrix-based position dependent prediction (PDP) is enabled for the current block.

11. The method of any of claims 8-10, wherein the transform kernel set is one of a multi-transform selection (MTS), a low frequency non-separable transform (LFNST), or a non-separable primary transform (NSPT).

12. The method of any of claims 8, 10, 11, wherein deriving the VIPM comprises deriving the VIPM when a TIMD mode or a DIMD mode is blended with a BV-based predictor.

13. The method of claim 8, wherein the VIPM is a first VIPM and the current block is a TIMD block, and the method further comprises:

   deriving the first VIPM using a first bin of a histogram of gradients (HoGs) computed on the prediction block;
   deriving a second VIPM using a second bin of the HoGs on the prediction block;
   based on the first VIPM, determining a first transform kernel set;
   based on the second VIPM, determining a second transform kernel set; and
   testing the first transform kernel set and the second transform kernel set to select one of the first transform kernel set or the second transform kernel set.

14. The method of claim 13, wherein the VIPM derived to obtain the transform kernel set is one of a multi-transform selection (MTS), a low frequency non-separable transform (LFNST), or a non-separable primary transform (NSPT).

**FIG. 1**

FIG. 2

**FIG. 3**

EP 4 738 815 A1

Current CU

FIG. 4

**FIG. 5**

EP 4 738 815 A1

FIG. 6

FIG. 7

reference line 3

reference line 2

reference line 1

top template

current block

left template

**FIG. 8**

FIG. 9

EP 4 738 815 A1

FIG. 10

FIG. 11

$$4xN/Nx4 \geq 4 \begin{cases} 4x4 \longrightarrow \boxed{\text{NSPT4x4}} \\ 4x8 \longrightarrow \boxed{\text{NSPT4x8}} \\ 8x4 \longrightarrow \boxed{\text{NSPT8x4}} \\ 4x16 \longrightarrow \boxed{\text{NSPT4x16}} \\ 16x4 \longrightarrow \boxed{\text{NSPT16x4}} \\ \text{else} \longrightarrow \boxed{\text{DCT-II+LFNST4}} \end{cases}$$

$$8xN/Nx8 \geq 8 \begin{cases} 8x8 \longrightarrow \boxed{\text{NSPT8x8}} \\ 8x16 \longrightarrow \boxed{\text{NSPT8x16}} \\ 16x8 \longrightarrow \boxed{\text{NSPT16x8}} \\ \text{else} \longrightarrow \boxed{\text{DCT-II+LFNST8}} \end{cases}$$

$$MxN \ (M,N \geq 16) \longrightarrow \boxed{\text{DCT-II+LFNST16}}$$

**FIG. 12**

Europäisches
Patentamt

European
Patent Office

Office européen
des brevets

# EUROPEAN SEARCH REPORT

**Application Number**

EP 24 30 7248

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BONNINEAU (INTERDIGITAL) C ET AL: "EE2-4.4c, EE2-4.4d and EE2-4.4g: Multiple Transform Set Selection for LFNST/NSPT using implicit kernel derivation", 35. JVET MEETING; 20240712 - 20240719; SAPPORO; (THE JOINT VIDEO EXPLORATION TEAM OF ISO/IEC JTC1/SC29/WG11 AND ITU-T SG.16 ), , no. JVET-AI0213 13 July 2024 (2024-07-13), XP030320584, Retrieved from the Internet: URL:https://jvet-experts.org/doc_end_user/documents/35_Sapporo/wg11/JVET-AI0213-v8.zip JVET-AI0213-v6.docx [retrieved on 2024-07-13] * the whole document * ----- | 1-14 | INV. H04N19/11 H04N19/119 H04N19/12 H04N19/176 H04N19/593 |
| A | COBAN M ET AL: "Algorithm description of Enhanced Compression Model 13 (ECM 13)", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH2025 ; m68146 26 June 2024 (2024-06-26), XP030319932, Retrieved from the Internet: URL:https://jvet-experts.org/doc_end_user/documents/34_Rennes/wg11/JVET-AH2025-v1.zip JVET-AH2025-v1.docx [retrieved on 2024-06-26] * section [3.1.5 Decoder side intra mode derivation (DIMD)] * * section [3.1.8 Fusion for template-based intra mode derivation (TIMD)] * ----- -/-- | 1-14 | **TECHNICAL FIELDS SEARCHED (IPC)** H04N |

The present search report has been drawn up for all claims

| Place of search | Date of completion of the search | Examiner |
|---|---|---|
| The Hague | 22 May 2025 | Georgiou, Georgia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..........................................................................................

& : member of the same patent family, corresponding document

EPO FORM 1503 03.82 (P04C01)

**page 1 of 2**

| | Europäisches<br>Patentamt<br>European<br>Patent Office<br>Office européen<br>des brevets | **EUROPEAN SEARCH REPORT** | **Application Number**<br><br>EP 24 30 7248 |
| --- | --- | --- | --- |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION  (IPC) |
| --- | --- | --- | --- |
| A | ZHAO (BYTEDANCE) L ET AL: "EE2-4.1 related: Alternative intra mode derivation for LFNST/NSPT", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH0218 11 April 2024 (2024-04-11), XP030317665, Retrieved from the Internet: URL:https://jvet-experts.org/doc_end_user/ documents/34_Rennes/wg11/JVET-AH0218-v1.zi p JVET-AH0218-v1.docx [retrieved on 2024-04-11] * the whole document *<br><br>----- | 1-14 | |
| | | | **TECHNICAL FIELDS<br>SEARCHED        (IPC)** |

The present search report has been drawn up for all claims

| Place of search | Date of completion of the search | Examiner |
| --- | --- | --- |
| The Hague | 22 May 2025 | Georgiou, Georgia |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

page 2 of 2

**REFERENCES CITED IN THE DESCRIPTION**

**Patent documents cited in the description**

- EP 24306846 A